(19) Europäisches Patentamt
European Patent Office
Office européen des brevets

(11) **EP 3 219 387 B1**

(12) **EUROPEAN PATENT SPECIFICATION**

(45) Date of publication and mention
of the grant of the patent:
**08.07.2020 Bulletin 2020/28**

(21) Application number: **15859226.1**

(22) Date of filing: **10.11.2015**

(51) Int Cl.:
*B01J 29/46* (2006.01)  *B01D 53/86* (2006.01)
*B01D 53/90* (2006.01)  *B01D 53/94* (2006.01)
*B01J 29/48* (2006.01)  *B01J 29/70* (2006.01)
*B01J 29/76* (2006.01)  *F01N 3/08* (2006.01)
*F01N 3/10* (2006.01)  *F01N 3/28* (2006.01)
*B01J 29/40* (2006.01)  *B01J 29/78* (2006.01)
*F01N 3/20* (2006.01)

(86) International application number:
**PCT/JP2015/081555**

(87) International publication number:
**WO 2016/076296 (19.05.2016 Gazette 2016/20)**

(54) **METHOD FOR DECOMPOSING AN ALDEHYDE CONTAINED IN EXHAUST GAS**

VERFAHREN ZUR ZERSETZUNG EINES IM ABBGAS VORHANDENEN ALDEHYDS

MÉTHODE POUR DÉCOMPOSER UN ALDHEYDE PRÉSENT DANS DES GAZ D'ÉCHAPPEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.11.2014 JP 2014229690**

(43) Date of publication of application:
**20.09.2017 Bulletin 2017/38**

(73) Proprietor: **Hitachi Zosen Corporation
Osaka-shi, Osaka 559-8559 (JP)**

(72) Inventors:
• **NISHI, Tsugumi**
  **Osaka-shi**
  **Osaka 559-8559 (JP)**
• **HIKAZUDANI, Susumu**
  **Osaka-shi**
  **Osaka 559-8559 (JP)**
• **SHONO, Emi**
  **Osaka-shi**
  **Osaka 559-8559 (JP)**

(74) Representative: **Grünecker Patent- und
Rechtsanwälte
PartG mbB
Leopoldstraße 4
80802 München (DE)**

(56) References cited:
EP-A1- 1 967 264    EP-A1- 2 554 809
EP-B1- 2 056 955    WO-A1-2013/004917
CN-A- 102 476 029   JP-A- H0 655 076
JP-A- S4 974 660    JP-A- H07 171 341
JP-A- H10 165 816   JP-A- 2001 029 748
JP-A- 2001 293 368  JP-A- 2006 095 395
US-A- 6 056 928     US-A1- 2008 279 741
US-A1- 2013 064 758 US-A1- 2013 202 524

• KOEGEL M ET AL: "KATALYTISCHE
ENTFERNUNG VON N2O UND NO MIT
EISENHALTIGEN ZEOLITHEN", CHEMIE
INGENIEUR TECHNIK, WILEY VCH. VERLAG,
WEINHEIM; DE, vol. 70, no. 9, 1 September 1998
(1998-09-01), page 1164, XP000779358, ISSN:
0009-286X, DOI: 10.1002/CITE.3307009134

**Description**

Technical Field

The present invention relates to a catalyst for decomposing aldehydes such as formaldehyde in combustion exhaust gas, and an exhaust gas treatment apparatus and an exhaust gas treatment method using the aldehyde decomposition catalyst.

Background Art

Nitrogen oxides may be included in various combustion exhaust gases from internal combustion engines such as diesel engines and gas engines and combustion facilities such as waste-incineration plants, boilers, and gas turbines and exhaust gases from industrial facilities. Some known methods for removing nitrogen oxides from combustion exhaust gases use alcohols as a reducing agent (e.g., Patent Literature 1).

However, when an alcohol is contacted with a catalyst made of a zeolite carrying a metal, which is commonly used for a denitration reaction for removing nitrogen oxides, oxidation of the alcohol occurs in addition to the target denitration reaction, and as a result, aldehydes are generated as an intermediate product in addition to CO and $CO_2$.

Aldehydes are harmful to many organisms, and among them, formaldehyde is highly toxic and causes irritation of the respiratory system, eyes, throat, skin and the like.

Catalysts capable of decomposing aldehydes such as formaldehyde are disclosed in Patent Literatures 2 and 3.

The catalyst disclosed in Patent Literature 2 is made of a zeolite selected from ZSM-5, faujasite, or mordenite, wherein the zeolite carries Pt. Use of this catalyst is costly because the carrier carries a noble metal Pt. In addition, the catalyst has to be used in a large amount to achieve sufficient aldehyde decomposition performance.

The catalyst disclosed in Patent Literature 3 is made of a zeolite selected from mordenite, ferrierite, ZSM-5, β-zeolite, Ga-silicate, Ti-silicate, Fe-silicate, or Mn-silicate, wherein the zeolite carries a noble metal selected from Ru, Rh, Pd, Ag, Os, Ir, Pt, or Au. Among them, those including Pd or Ag as a noble metal achieve a relatively high formaldehyde decomposition rate. However, as with the catalyst disclosed in Patent Literature 2, use of a noble metal increases the cost.

Further, Patent Literature 4 discloses a catalyst made of $TiO_2$ carrying an oxide of a metal selected from W, Mo, or V.

However, although the catalyst disclosed in Patent Literature 4 achieves high performance in decomposing formaldehyde at around 500°C (the conversion rate is slightly less than 90%), the catalyst achieves insufficient decomposition performance below 500°C. After various combustion exhaust gases and exhaust gases from industrial facilities are freed of nitrogen oxides using an alcohol as a reducing agent, the exhaust gases commonly have a temperature below 500°C. In such cases, the catalyst disclosed in Patent Literature 4 cannot be used.

By contrast, the catalysts disclosed in Patent Literatures 2 and 3 made of particular zeolites as a carrier achieve high performance in decomposing aldehydes such as formaldehyde at a relatively low temperature up to around 300°C, and can be used for treating aldehydes in exhaust gases described above.

However, these catalysts use expensive noble metals carried by a carrier, and the cost therefor is high.

Patent Literature 1: Japanese Unexamined Patent Application Publication No. 2013-226543
Patent Literature 2: Japanese Unexamined Patent Application Publication No. Hei 10-309443
Patent Literature 3: Japanese Unexamined Patent Application Publication No. 2012-517343
Patent Literature 4: Japanese Unexamined Patent Application Publication No. 2005-319393

EP 1 967264 A1, EP 2 056 955 B1, JP 2001 293368 A, JP H06 55076 A concern methods for the denitrification of exhaust gases and catalysts therefor. These documents mention catalyst compositions comprising $NH_4$-MFI zeolite carrying at least one of copper, manganese, zinc or iron, or catalyst compositions comprising $NH_4$-BEA carrying at least one of copper, cerium or iron.

US2013/0202254 A1, WO 2013/004917 A1, EP 2 554 809 A1, US 2013/0064758 A1 and US 2008/0279741 concern exhaust gas treatment apparatus comprising a denitrification unit and a further unit downstream thereof for decomposing ammonia slip. The use of catalysts like $NH_4$-MFI or $NH_4$-BEA ion exchanged with Cu and/or Fe are disclosed.

Disclosure of Invention

Technical Problem

The present invention addresses the above problems, and one object of the present invention is to provide an exhaust gas treatment method using the aldehyde decomposition catalyst, which substitute relatively inexpensive metals for expensive noble metals to lower the cost, and achieve sufficient aldehyde decomposition performance with a small amount of catalyst.

Solution to Problem

To overcome the above problems, an aldehyde decomposition catalyst used in the present invention is made of a zeolite in a cation form $NH_4$ having a structure selected from MFI and BEA and carrying at least one metal selected from the group consisting of Cu, Mn, Ce, Zn, Fe, and Zr.

As described above, Japanese Unexamined Patent Application Publication No. Hei 10-309443 and Japanese Unexamined Patent Application Publication No. 2012-517343 disclose catalysts made of particular zeolites carrying noble metals. There are various known zeolites that act variously depending on the surface texture and structure thereof and the like. Both of the above literatures disclose only specific species of zeolites, and do not at all disclose what zeolite among the any kind of zeolites including those not appearing in the literatures is suitable as a carrier of an aldehyde decomposition catalyst, and more specifically, what zeolite decomposes aldehydes by itself rather than carries a metal.

When an alcohol is used as a reducing agent to remove nitrogen oxide that may be contained in various combustion exhaust gases from boilers, waste-incineration plants, diesel engines, gas engines, gas turbines, and the like and exhaust gases from industrial facilities, the combustion exhaust gases contain aldehydes such as formaldehyde. When the combustion exhaust gas is contacted with an aldehyde decomposition catalyst made of a zeolite in a cation form $NH_4$ having a structure selected from MFI and BEA and carrying at least one metal selected from the group consisting of Cu, Mn, Ce, Zn, Fe, and Zr, oxidation occurs and aldehydes can be converted into a harmless gas.

When an alcohol is used as a reducing agent to remove nitrogen oxide as described above, different aldehydes may be generated depending on the alcohol used. The aldehyde decomposition catalyst used in the present invention can decompose any kind of aldehydes.

Among them, it is particularly desirable to decompose formaldehyde known to have a high toxicity.

In the aldehyde decomposition catalyst used in the present invention, a zeolite having such a structure as to have ability to decompose aldehydes by itself carries a catalytically active metal, resulting in a higher aldehyde decomposition performance. As described above, it was found in the present invention that a desired aldehyde decomposition performance can be achieved when particular low-cost metal species is carried instead of expensive noble metals.

The zeolite may be caused to carry a metal by any method, for example, the ion exchange method or impregnation method.

The temperature range of the combustion exhaust gas to which the present invention is applicable is not particularly limited but is advantageously from 200 to 600°C, and more advantageously from 200 to 400°C. The decomposition performance is higher as the reaction temperature is higher, but the temperature of the combustion exhaust gas is suitably up to 600°C, or more suitably up to 400°C in consideration of the limit temperature of the combustion exhaust gas, the cost, and the like.

The aldehyde decomposition catalyst used in the present invention described above may have any form as long as it can decompose aldehydes. For example, it may be in the form of pellet or honeycomb.

The invention is defined in claims 1 and 2.

Advantageous Effects of Invention

The aldehyde decomposition catalyst used in the present invention is made of a zeolite in a cation form $NH_4$ having a structure selected from MFI and BEA and carrying at least one metal selected from the group consisting of Cu, Mn, Ce, Zn, Fe, and Zr, and can decompose aldehydes such as formaldehyde in a combustion exhaust gas into a harmless gas. The aldehyde decomposition catalyst of the present invention achieves lower cost than conventional similar catalysts in which noble metals are carried.

The aldehyde decomposition catalyst used in the present invention described above has sufficient aldehyde decomposition performance in a temperature range of 200°C and higher. Therefore, it can be applied to decomposition of aldehydes in a combustion exhaust gas having a relatively low temperature. In addition, even a small amount of this catalyst can decompose aldehydes.

Further, the above aldehyde decomposition catalyst can be applied to exhaust gas treatment apparatus for exhaust gases discharged from internal combustion engines such as diesel engines and gas engines and combustion facilities such as waste-incineration plants, boilers, and gas turbines, so as to efficiently decompose aldehydes contained in the combustion exhaust gases and prevent, for example, formaldehyde, which is harmful and highly toxic to organisms, from being released.

Brief Description of Drawings

Fig. 1 is a flow chart showing a test apparatus used for catalyst performance tests.

Fig. 2 is a graph showing decomposition rates calculated from the catalyst tests for Reference Examples 1 and 2.

Fig. 3 is a graph showing decomposition rates calculated from the catalyst tests for Reference Example 3.

Fig. 4 is a block diagram showing an exhaust gas treatment apparatus of a marine diesel engine using an aldehyde decomposition catalyst.

Fig. 5 is a block diagram showing a variation of the exhaust gas treatment apparatus.

Description of Embodiment

The aldehyde decomposition catalyst used in the present invention will be hereinafter described in detail.

Embodiment 1

Embodiment 1 covers aldehyde decomposition catalysts made of a zeolite having a structure selected from MFI and BEA.
The following commercially available zeolites were used for Embodiment 1.

Reference Example 1: $NH_4$-MFI zeolite (HSZ-830NHA from Tosoh Corporation with a $SiO_2/Al_2O_3$ molar ratio of 28)

Reference Example 2: $NH_4$-BEA zeolite (CP814E from Zeolyst International with a $SiO_2/Al_2O_3$ molar ratio of 25)

Comparative Example 1: $NH_4$-CHA zeolite (ZD8028 from Zeolyst International with a $SiO_2/Al_2O_3$ molar ratio of 30)

Comparative Example 2: $NH_4$-MOR zeolite (HSZ-643NHA from Tosoh Corporation with a $SiO_2/Al_2O_3$ molar ratio of 18)

Catalyst Performance Test

Catalyst performance test was performed on the catalysts of Reference Examples 1 and 2 and Comparative Examples 1 and 2. The catalysts of Reference Examples 1 and 2 and Comparative Examples 1 and 2 were press-molded and then ground to mesh sizes 28 to 14.

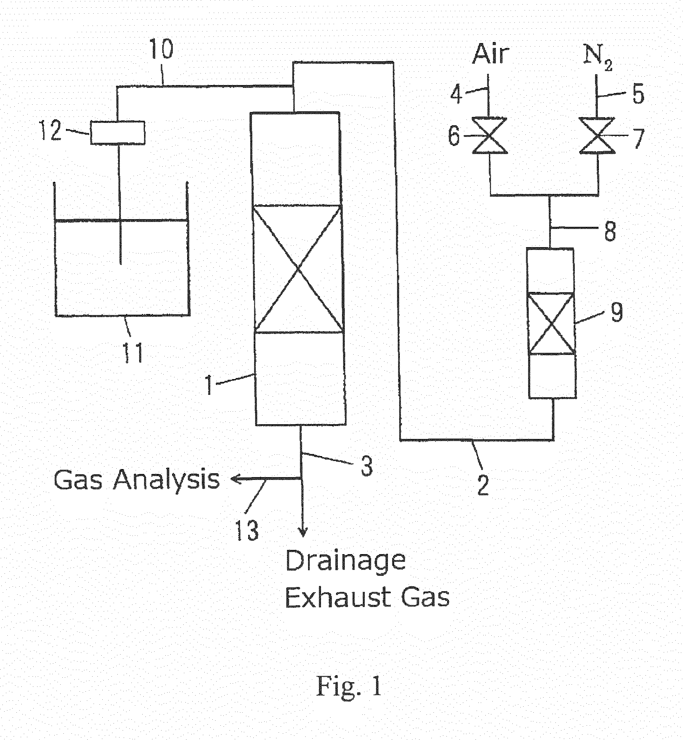

Fig. 1 is a flow chart of a test apparatus used for catalyst performance tests.
The catalyst obtained as described above was filled into a stainless reactor (1) having an inner diameter of 10.6 mm.
The reactor (1) filled with the catalyst receives a test gas at an upper portion thereof through a line (2) and discharges the gas treated with the aldehyde decomposition catalyst at a lower portion thereof through a line (3).
The test gas received by the reactor (1) through the line (2) is prepared by mixing the air from a line (4) with $N_2$ gas from a line (5). The line (4) and the line (5) are provided with a valve (6) and a valve (7), respectively. The degree of opening of the valve (6) and the valve (7) can be adjusted to control the flow rate of respective gases, thereby to control the gas flow rate and the mixture ratio.
The mixed gas is introduced into an upper portion of a heater (9) through a line (8), and the gas is heated to a predetermined temperature and fed from a lower portion of the heater (9) to the reactor (1) through the line (2).
An aldehyde solution (a formaldehyde solution for Embodiment 1, hereinafter referred to as "the formaldehyde solution") is fed to the upper portion of the reactor (1) through a line (10).
The formaldehyde solution to be introduced into the reactor (1) is pumped up from a formaldehyde solution tank (11) by a liquid metering pump (12) and then merged from the line (10) into the line (2).
The treated gas discharged from the reactor (1) is discharged out through the line (3), while partially fed to gas analysis through a line (13).
Table 1 shows the test conditions applied to the test performed with the test apparatus of Fig. 1.

Table 1

| Gas Component: $O_2$ | 14% |
|---|---|
| Gas Component: $N_2$ | Balance |
| Formaldehyde | 100 ppmvd |
| Moisture | 5% |
| Gas Flow Rate | 1L/min |
| Amount of Catalyst | 1.0g |
| Space Velocity (SV) | 60,000/h |
| Reaction Temperature | 250 °C, 300°C |

In Table 1, the term "Balance" indicates that $N_2$ is added such that the total gas composition is 100%, that is, the gas composition other than $O_2$, formaldehyde, and moisture is occupied by $N_2$.

The gas analysis was performed by measuring the outlet formaldehyde concentration with a gas detector tube. Based on the measurements by the gas detector tube, the decomposition rate indicating the formaldehyde decomposition performance of the catalyst was calculated from Formula (1) below.

Formula (1)

$$\text{Decomposition Rate} = \frac{\text{Formaldehyde (in)} - \text{Formaldehyde (out)}}{\text{Formaldehyde (in)}} \times 100$$

In Formula (1) above, formaldehyde (in) refers to the concentration of formaldehyde in the gas before introduction into the reactor (1), and formaldehyde (out) refers to the concentration of formaldehyde in the gas discharged from the reactor (1).

Result

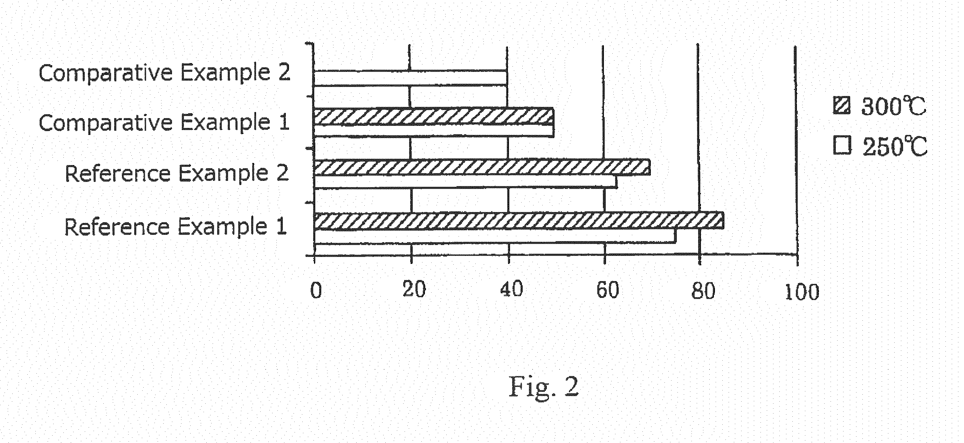

Fig. 2 shows a graph of the decomposition rate calculated in the above test, and Table 2 shows the calculated decomposition rates.

Table 2

| | Zeolite | Decomposition Rate (%) | |
|---|---|---|---|
| | | 250°C | 300°C |
| Reference Example 1 | MFI | 75 | 85 |
| Reference Example 2 | BEA | 63 | 70 |
| Comparative Example 1 | CHA | 50 | 50 |
| Comparative Example 2 | MOR | 40 | |

As shown in Fig. 2 and Table 2, Reference Examples 1 and 2 achieved satisfactory decomposition rates exceeding 60% under the temperature conditions of both 250°C and 300°C. By contrast, Comparative Examples 1 and 2 achieved some degrees of decomposition rates that were unsatisfactory as compared to those of Reference Examples 1 and 2.

Reference Example 3

Next, MOR zeolite was used to compare the decomposition rates of zeolites in different cation forms, H, $NH_4$,

and Na.

The test apparatus used was the same as in Fig. 1, and the temperature conditions of the gas fed into the reactor were 150°C, 175°C, 200°C, 225°C, 250°C, and 300°C. The decomposition rates were calculated by Formula (1) described above.

Result

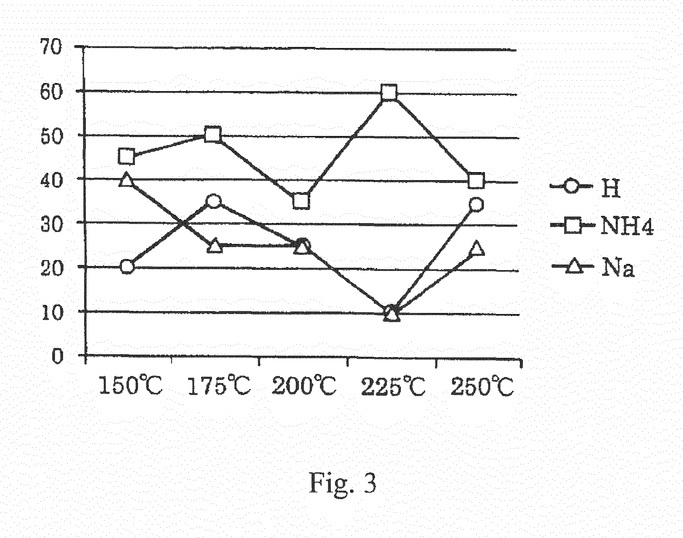

Fig. 3 shows a graph of the decomposition rate calculated in the above test, and Table 3 shows the calculated decomposition rates.

Table 3

| Cation Form | Decomposition Rate (%) | | | | |
|---|---|---|---|---|---|
| | 150°C | 175°C | 200°C | 225°C | 250°C |
| H | 20 | 35 | 25 | 10 | 3 5 |
| $NH_4$ | 45 | 5 0 | 35 | 60 | 40 |
| N a | 40 | 25 | 25 | 10 | 25 |

As shown in Fig. 3 and Table 3, $NH_4$-MOR zeolite achieved stable and satisfactory decomposition rates over the whole temperature range, rated as the best form.

As described above, the MOR zeolite was used for Reference Example 3 to compare the decomposition rates of $NH_4$, H, and Na forms. It could be naturally expected or generalized by those skilled in the art that $NH_4$ form is also the best for a zeolite having a structure selected from MFI and BEA.

Embodiment 2

Embodiment 2 covers aldehyde decomposition catalysts made of a zeolite having a structure selected from MFI and BEA and carrying at least one metal selected from the group consisting of Cu, Mn, Ce, Zn, Fe, and Zr.

Each of the catalysts of Embodiment 2 was prepared by addition of 10 g of zeolite into 200 ml of aqueous metal solution, stirring of the solution at 80°C for three hours, filtration, washing, and drying overnight at 110°C.

For simplicity, the following list only includes zeolite species as raw material, aqueous metal solution, and resultant catalyst.

Example 1

- Zeolite species: commercially available $NH_4$-MFI zeolite (HSZ-830NHA from Tosoh Corporation with a $SiO_2/Al_2O_3$ molar ratio of 28)
- Aqueous metal solution: aqueous $Cu(NO_3)_2$ solution
- Catalyst: Cu/MFI catalyst

Example 2

- Zeolite species: commercially available $NH_4$-MFI zeolite (CBV2314 from Zeolyst International with a $SiO_2/Al_2O_3$ molar ratio of 23)
- Aqueous metal solution: aqueous $Mn(NO_3)_2$ solution
- Catalyst: Mn/MFI catalyst

Example 3

- Zeolite species: commercially available $NH_4$-BEA zeolite (CP814E from Zeolyst International with a $SiO_2/Al_2O_3$

molar ratio of 25)
- Aqueous metal solution: aqueous $Ce(NO_3)_3$ solution
- Catalyst: Ce/BEA catalyst

Example 4

- Zeolite species: commercially available $NH_4$-BEA zeolite (CP814E from Zeolyst International with a $SiO_2/Al_2O_3$ molar ratio of 25)
- Aqueous metal solution: aqueous $Zn(NO_3)_2$ solution
- Catalyst: Zn/BEA catalyst

Example 5

- Zeolite species: commercially available $NH_4$-MFI zeolite (HSZ-830NHA from Tosoh Corporation with a $SiO_2/Al_2O_3$ molar ratio of 28)
- Aqueous metal solution: aqueous $Fe(NO_3)_3$ solution
- Catalyst: Fe/MFI catalyst

Example 6

- Zeolite species: commercially available $NH_4$-BEA zeolite (CP814E from Zeolyst International with a $SiO_2/Al_2O_3$ molar ratio of 25)
- Aqueous metal solution: aqueous $Fe(NO_3)_3$ solution
- Catalyst: Fe/BEA catalyst

Example 7

- Zeolite species: commercially available $NH_4$-MFI zeolite (HSZ-830NHA from Tosoh Corporation with a $SiO_2/Al_2O_3$ molar ratio of 28)
- Aqueous metal solution: aqueous $ZrO(NO_3)_2$ solution
- Catalyst: Zr/MFI catalyst

Example 8

- Zeolite species: commercially available $NH_4$-BEA zeolite (CP814E from Zeolyst International with a $SiO_2/Al_2O_3$ molar ratio of 25)
- Aqueous metal solution: aqueous $ZrO(NO_3)_2$ solution
- Catalyst: Zr/BEA catalyst

Comparative Example 3

- Zeolite species: commercially available $NH_4$-MFI zeolite (CBV2314 from Zeolyst International with a $SiO_2/Al_2O_3$ molar ratio of 23)
- Aqueous metal solution: aqueous $AgNO_3$ solution
- Catalyst: Ag/MFI catalyst

Comparative Example 4

- Zeolite species: commercially available $NH_4$-BEA zeolite (CP814E from Zeolyst International with a $SiO_2/Al_2O_3$ molar ratio of 25)
- Aqueous metal solution: aqueous $Mg(NO_3)_2$ solution
- Catalyst: Mg/BEA Catalyst

Comparative Example 5

- Zeolite species: commercially available $NH_4$-MFI zeolite (CBV2314 from Zeolyst International with a $SiO_2/Al_2O_3$ molar ratio of 23)
- Aqueous metal solution: aqueous $Ba(NO_3)_2$ solution
- Catalyst: Ba/MFI catalyst

Comparative Example 6

- Zeolite species: commercially available $NH_4$-MFI zeolite (CBV2314 from Zeolyst International with a $SiO_2/Al_2O_3$ molar ratio of 23)
- Aqueous metal solution: aqueous $La(NO_3)_3$ solution
- Catalyst: La/MFI catalyst

Comparative Example 7

- Zeolite species: commercially available $NH_4$-BEA zeolite (CP814E from Zeolyst International with a $SiO_2/Al_2O_3$ molar ratio of 25)
- Aqueous metal solution: aqueous $Co(NO_3)_2$ solution
- Catalyst: Co/BEA catalyst

Comparative Example 8

- Zeolite species: commercially available $NH_4$-MFI zeolite (CBV2314 from Zeolyst International with a $SiO_2/Al_2O_3$ molar ratio of 23)
- Aqueous metal solution: aqueous $SrO(NO_3)_2$ solution
- Catalyst: Sr/MFI catalyst

Comparative Example 9

- Zeolite species: commercially available $NH_4$-BEA zeolite (CP814E from Zeolyst International with a $SiO_2/Al_2O_3$ molar ratio of 25)
- Aqueous metal solution: aqueous $Sr(NO_3)_2$ solution
- Catalyst: Sr/BEA catalyst

Comparative Example 10

- Zeolite species: commercially available H-ZSM-5(MFI) zeolite (CBV8020 from PQ Co. with a $SiO_2/Al_2O_3$ molar ratio of 70)
- Aqueous metal solution: aqueous nitric acid solution of dinitro diamine platinum $[Pt(NH_3)_2(NO_3)_2]$
- Catalyst: Pt/ZSM-5(MFI8030)

Comparative Example 11

- Zeolite species: commercially available H-ZSM-5(MFI) zeolite (CBV3020 from PQ Co. with a $SiO_2/Al_2O_3$ molar ratio of 35)
- Aqueous metal solution: aqueous nitric acid solution of dinitro diamine platinum $[Pt(NH_3)_2(NO_3)_2]$
- Catalyst: Pt/ZSM-5(MFI3030)

Comparative Example 12

- Zeolite species: commercially available mordenite zeolite (PQ511 from PQ Co. with a $SiO_2/Al_2O_3$ molar ratio of 12.8)
- Aqueous metal solution: aqueous nitric acid solution of dinitro diamine platinum $[Pt(NH_3)_2(NO_3)_2]$
- Catalyst: Pt/mordenite

For Comparative Examples 10 to 12, the catalysts were prepared using the same zeolite species and aqueous metal solutions by the same method as disclosed in Japanese Unexamined Patent Application Publication No. Hei 10-309443. The method of preparing the catalysts of Comparative Examples 10 to 12 was slightly different from the method of preparing the catalysts of Examples 1 to 8 and Comparative Examples 3 to 9, but these two methods were essentially the same. Therefore, the results of the performance test of Examples 1 to 8 and Comparative Examples 3 to 9 will now be compared with the results of the test disclosed in Japanese Unexamined Patent Application Publication No. Hei 10-309443.

Catalyst Performance Test

Catalyst performance test was performed on the catalysts of Examples 1 to 8 and Comparative Examples 3 to 9. The catalysts of Examples 1 to 8 and Comparative Examples 3 to 9 were press-molded and then ground to mesh sizes 28 to 14.

The catalysts obtained as described above were filled into a stainless reactor (1) having an inner diameter of 10.6 mm shown in Fig. 1.

The catalyst performance test was performed using the test apparatus shown in Fig. 1, as for Embodiment 1. Therefore, the subsequent operations correspond to those for Embodiment 1 and thus detailed description thereof will be omitted.

Table 4 shows the test conditions applied to the test performed with the test apparatus of Fig. 1.

Table 4

| | |
|---|---|
| Gas Component: $O_2$ | 14% |
| Gas Component: $N_2$ | Balance |
| Formaldehyde | 100 ppmvd |
| Moisture | 5% |
| Gas Flow Rate | 2L/min |
| Amount of Catalyst | 1.0 g |
| Space Velocity (SV) | 120,000/h |
| Reaction Temperature | 250 °C, 200 °C |

In Table 4, the space velocity (SV) is a value equal to the amount of gas ($m^3/h$) to be treated flowing into the reactor divided by the volume ($m^3$) occupied by the reactor containing the catalyst. As this value is larger, the catalyst is contacted more efficiently.

The gas analysis was performed in the same manner as for Embodiment 1, and the decomposition rate was calculated by Formula (1), as for Embodiment 1. Detailed description of these operations will be omitted.

The numerical values to be compared will now be described before test results are presented.

For Embodiment 2, the space value SV is set at 120, 000/h. In general, as the amount of catalyst is larger (SV is smaller), the catalyst achieves better performance. It is reasonable to expect that, when the values of the decomposition rate of Comparative Examples 10 to 12 for SV=100,000/h disclosed in the literature are converted into the values of the decomposition rate that would be obtained for SV=120,000/h, the decomposition performance will be degraded linearly. Therefore, the values disclosed in Japanese Unexamined Patent Application Publication No. Hei 10-309443 that was obtained under the conditions of SV=100, 000/h and 200°C can be converted as in Table 5 below.

Table 5

|  |  | Decomposition Rate (%) | |
| --- | --- | --- | --- |
|  |  | 100,000/h | 120,000/h |
| Comparative Example 10 | Pt/MFI | 57.5 | 47.9 |
| Comparative Example 11 | Pt/MFI | 52.7 | 43.9 |
| Comparative Example 12 | Pt/MOR | 67. 6 | 56.3 |

Therefore, it can be deemed from the comparison with the values converted from those disclosed in the literature that Examples 1 to 8 achieved about the same results as Comparative Examples 10 to 12 when decomposition rates of about 50% are obtained under the conditions of SV=120,000/h and a temperature of 200°C or 250°C.

Table 6 shows the results of Examples 1 to 8 and Comparative Examples 3 to 9.

Table 6

|  |  | Decomposition Rate (% | |
| --- | --- | --- | --- |
|  |  | 250°C | 200°C |
| Example 1 | Cu/MFI | 96.1 | 51.2 |
| Example 2 | Mn/MFI | 66.4 | 51.9 |
| Example 3 | Ce/BEA | 61.3 | 66. 0 |
| Example 4 | Zn/BEA | 56.0 | 69.1 |
| Example 5 | Fc/MFI | 84. 0 | 63.3 |
| Example 6 | Fe/BEA | 70. 2 | 56.4 |
| Example 7 | Zr/MFI | 53.8 | 74.4 |
| Example 8 | Zr/BEA | 80.4 | 70.3 |
| Comparative Example 3 | Ag/MFI | 51.1 | 51.1 |
| Comparative Example 4 | Mg/BEA | 51.5 | 41.7 |
| Comparative Example 5 | Ba/MFI | 50.8 | 51.0 |
| Comparative Example 6 | La/MFI | 56.2 | 50.9 |
| Comparative Example 7 | Co/BEA | 50.6 | 70. 2 |
| Comparative Example 8 | Sr/MFI | 4 6.2 | 60.6 |
| Comparative Example 9 | Sr/BEA | 50.3 | 63.7 |

All the catalysts of Examples 1 to 8 achieved decomposition rates exceeding 50% under the temperature conditions of both 200°C and 250°C.

In particular, Example 1 achieved an excellent decomposition rate of 96.1% at 250°C, Example 2 achieved a satisfactory decomposition rate of 66.4% at 250°C, Example 3 achieved satisfactory decomposition rates of 66.0% and 61.3% at 200°C and 250°C, respectively, Example 4 achieved a satisfactory decomposition rate of 69.1% at 200°C, Example 5 achieved an excellent decomposition rate of 84.0% at 250°C and a satisfactory decomposition rate of 63.3% at 200°C, Example 6 achieved an excellent decomposition rate of 70.2% at 250°C and a satisfactory decomposition rate of 56.4% at 200°C, Example 7 achieved a satisfactory decomposition rate of 74.4% at 200°C, Example 8 achieved an excellent decomposition rate of 80.4% at 250°C and a satisfactory decomposition rate of 70.3% at 200°C.

In particular, the catalysts made of MFI zeolite carrying Cu or Fe achieved at 250°C excellent decomposition rates of 96.1% and 84.0%, respectively.

Further, the catalysts made of BEA zeolite carrying Fe or Zr achieved at 250°C excellent decomposition rates of 70.2% and 80.4%, respectively.

By contrast, the catalysts of Comparative Examples 3 to 9, which achieved the decomposition rates of less than 50% or more than 50% depending on the conditions, did not exhibit distinct advantages over the values disclosed in the above literature.

As described above, the catalysts of Examples 1 to 8 were made of a particular zeolite carrying inexpensive metals instead of expensive metals such as Pt. Thus, it was possible to decompose formaldehyde in the combustion exhaust gas using a smaller amount of catalyst (a higher space velocity) containing inexpensive metals.

Embodiment 3: an exhaust gas treatment apparatus of a marine diesel engine and an exhaust gas treatment method using an aldehyde decomposition catalyst

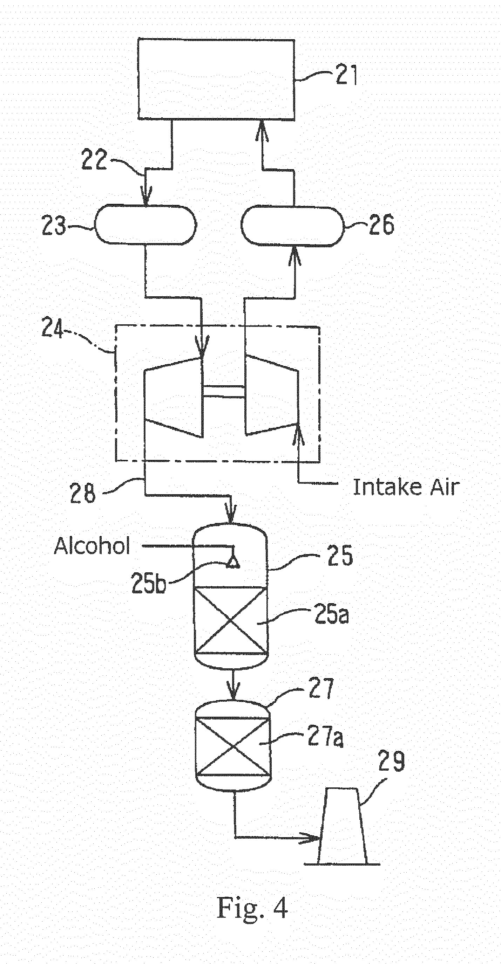

An exhaust gas treatment apparatus of a marine diesel engine using the aldehyde decomposition catalyst according to the present invention will now be described with reference to Fig. 4.

Since a marine diesel engine runs on C fuel oil containing a sulfur component, the combustion exhaust gas thereof contains a sulfur oxide in addition to a nitrogen oxide. The combustion exhaust gas discharged from the diesel engine has a temperature of about 350°C. It is then discharged via a turbocharger and its temperature is reduced to about 200 to 300°C. When the combustion exhaust gas is denitrated by ammonia selective reduction, the sulfur oxide reacts with ammonia to generate ammonium sulfate that may deposit in an exhaust path to block the heat exchanger.

Since the cause of blocking of the heat exchanger resides in use of ammonia as a reducing agent, some methods substitute alcohol for ammonia as a reducing agent to overcome the problem of blocking. However, when alcohol is contacted with common denitration catalysts made of a zeolite carrying a metal, oxidation of alcohol occurs in addition to denitration reaction. As a result, aldehydes are generated.

Embodiment 3 covers an exhaust gas treatment apparatus and an exhaust gas treatment method that use a small amount of catalyst to sufficiently decompose aldehydes, which is generated in denitration by denitration catalyst using alcohol as a reducing agent and contained in an exhaust gas having a low temperature of 200 to 300°C.

As shown in Fig. 4, an exhaust gas having a temperature of about 350°C is discharged from combustion chambers of a diesel engine (21) and is delivered from an exhaust pipe (22) to the turbine side of a turbocharger (24) via an exhaust reservoir tank (23). As a result of release of heat, the exhaust gas discharged from the turbocharger (24) via the exhaust gas path (28) has a reduced temperature of about 200 to 300°C, and is delivered to a denitration unit (25) including a zeolite carrying a prescribed metal. The pressurized air delivered from a compressor of the turbocharger (24) is fed to combustion chambers of the diesel engine (21) via an air-supply reservoir tank (26).

In the denitration unit (25), an alcohol serving as a reducing agent is injected into the exhaust gas from an injection nozzle (25b) provided at an exhaust gas inlet, and the exhaust gas is contacted with a denitration catalyst (25a), such that oxidation of the alcohol occurs along with the denitration reaction so as to generate aldehydes. The exhaust gas discharged from the denitration unit (25) is delivered to an aldehyde decomposition unit (27) serving as an aldehyde decomposition means. In the aldehyde decomposition unit (27), the exhaust gas is contacted with the aldehyde decomposition catalyst (27a) of any one of Examples 1 to 8 of Embodiment 2, that is, the aldehyde decomposition catalyst (27a) made of a zeolite having a structure selected from MFI and BEA and carrying at least one metal selected from the group consisting of Cu, Mn, Ce, Zn, Fe, and Zr. The aldehydes contained in the exhaust gas is effectively decomposed, and then the exhaust gas is discharged through an exhaust air chimney (29).

In summary, Embodiment 3 covers an exhaust gas treatment apparatus in which a combustion exhaust gas is discharged from the diesel engine (21) and introduced into a denitration unit (25) via a turbocharger (24), the combustion exhaust gas has a low temperature of 200 to 300°C, an alcohol serving as a reducing agent is fed to the combustion exhaust gas, and the combustion exhaust gas is contacted with a denitration catalyst for denitration, and the exhaust gas treatment apparatus further includes an aldehyde decomposition unit (27) serving as an aldehyde decomposition means having an aldehyde decomposition catalyst for decomposing aldehydes contained in the combustion exhaust gas discharged from the denitration unit (25), and the aldehyde decomposition catalyst is made of a zeolite in a cation form $NH_4$ having a structure selected from MFI and BEA and carrying at least one metal selected from the group consisting of Cu, Mn, Ce, Zn, Fe, and Zr.

Further, Embodiment 3 covers an exhaust gas treatment method in which a combustion exhaust gas is discharged from the diesel engine (21) and introduced into a denitration unit (25) via a turbocharger (24), the combustion exhaust gas has a low temperature of 200 to 300°C, an alcohol serving as a reducing agent is fed to the combustion exhaust gas, and the combustion exhaust gas is contacted with a denitration catalyst for denitration. The combustion exhaust gas discharged from the denitration unit (25) is contacted with an aldehyde decomposition catalyst to decompose aldehydes contained in the combustion exhaust gas. The aldehyde decomposition catalyst is made of a zeolite in a cation form $NH_4$ having a structure selected from MFI and BEA and carrying at least one metal selected from the group consisting of Cu, Mn, Ce, Zn, Fe, and Zr.

Embodiment 3 covers a method including feeding an alcohol serving as a reducing agent to an exhaust gas discharged from a turbocharger (24) and having a low temperature of about 200 to 300°C. The exhaust gas is contacted with a denitration catalyst to cause oxidation reaction of the alcohol that generates aldehydes, in addition to the denitration reaction. However, the aldehydes can be effectively decomposed by an aldehyde decomposition catalyst made of a zeolite in a cation form $NH_4$ having a structure selected from MFI and BEA and carrying at least one metal selected from the group consisting of Cu, Mn, Ce, Zn, Fe, and Zr. Thus, it is possible to prevent, for example, formaldehyde, which is harmful to organisms and highly toxic, from being released along with the combustion exhaust gas. Therefore, sufficient aldehyde decomposition performance can be achieved with a small amount of catalyst.

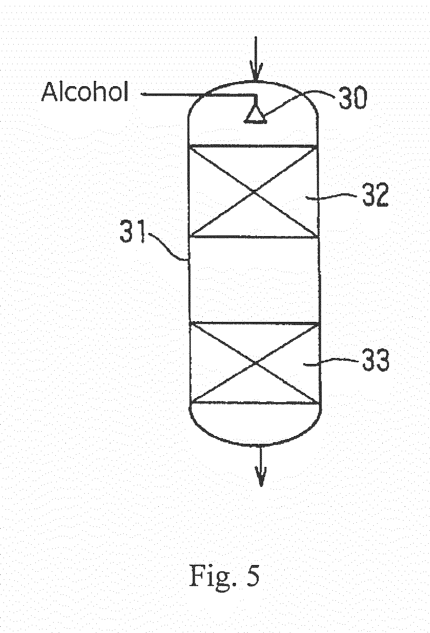

In Embodiment 3, the denitration unit (25) arranged upstream in the exhaust gas path and the aldehyde decomposition unit (27) arranged downstream in the same are independent from each other. It is also possible to arrange the denitration catalyst (32) upstream in an integrated container (31) and arrange the aldehyde decomposition catalyst (33), serving as an aldehyde decomposition means, downstream in the same, as shown in Fig. 5. The reference numeral (30) denotes an injection nozzle for alcohol.

The aldehyde decomposition catalyst (27a), (33) used in Embodiment 3 may be in any appropriate form such as powder, particle, granule (including spherical ones), pellet (cylindrical or annular ones), tablet, or honeycomb (monolithic body).

The foregoing was description of treatment apparatuses for a combustion exhaust gas discharged from marine diesel engines, the treatment apparatus using aldehyde decomposition catalyst. Combustion exhaust gas treatment apparatuses having essentially the same structure as the above-described treatment apparatuses can be used on land as treatment apparatuses for a combustion exhaust gas discharged from, for example, diesel engines installed in a power plant. Also, such combustion exhaust gas treatment apparatuses can be suitably applied to internal combustion engines such as dual fuel engines (DF engines) and gas engines. For the DF engines and the gas engines, it is possible to denitrate exhaust gas discharged from, for example, a compressor of a turbocharger and having a temperature of about 200 to 300°C. Further, the combustion exhaust gas treatment apparatuses can be used for denitrating the combustion exhaust gas discharged from combustion facilities such as waste-incineration plants, boilers, and gas turbines.

## Claims

1. A method for decomposing an aldehyde contained in a combustion exhaust gas, the method comprising a step of contacting the aldehyde with an aldehyde decomposition catalyst, **characterized in that** the aldehyde decomposition catalyst is made of a zeolite in a cation form NH4 having a structure selected from MFI and BEA and carrying at least one metal selected from the group consisting of Cu, Mn, Ce, Zn, Fe, and Zr.

2. An exhaust gas treating method in which a combustion exhaust gas is denitrated by contacting the combustion exhaust gas with a denitration catalyst (25a), wherein an alcohol is fed as a reducing agent for the denitration to the combustion exhaust gas, and an aldehyde by-produced in the denitration is decomposed according to claim 1.

## Patentansprüche

1. Verfahren zum Abbauen eines Aldehyds, der in einem Verbrennungs-Abgas enthalten ist, wobei das Verfahren einen Schritt umfasst, in dem der Aldehyd mit einem Aldehydabbau-Katalysator in Kontakt gebracht wird, **dadurch gekennzeichnet, dass** der Aldehydabbau-Katalysator aus einem Zeolith in einer Kationen-Form NH4 besteht, der eine Struktur aufweist, die aus MFI sowie BEA ausgewählt wird und wenigstens ein Metall trägt, das aus der Gruppe ausgewählt wird, die aus Cu, Mn, Ce, Zn, Fe und Zr besteht.

2. Abgasbehandlungsverfahren, wobei ein Verbrennungs-Abgas denitriert wird, indem das Verbrennungsabgas mit einem Denitrierungs-Katalysator (25a) in Kontakt gebracht wird, wobei dem Verbrennungsabgas ein Alkohol als ein Reduktionsmittel für die Denitrierung zugeführt wird und ein bei der Denitrierung als Nebenprodukt anfallender Aldehyd gemäß Anspruch 1 abgebaut wird.

**Revendications**

1. Procédé de décomposition d'un aldéhyde contenu dans un gaz d'échappement de combustion, le procédé comprenant une étape de mise en contact de l'aldéhyde avec un catalyseur de décomposition d'aldéhyde, **caractérisé en ce que** le catalyseur de décomposition d'aldéhyde est constitué d'une zéolithe sous forme de cation $NH_4$ ayant une structure sélectionnée parmi les structures MFI et BEA et portant au moins un métal sélectionné parmi le groupe constitué par les métaux Cu, Mn, Ce, Zn, Fe et Zr.

2. Procédé de traitement des gaz d'échappement dans lequel un gaz d'échappement de combustion est dénitrifié en mettant le gaz d'échappement de combustion en contact avec un catalyseur de dénitrification (25a), dans lequel un alcool est alimenté comme agent réducteur pour la dénitrification des gaz d'échappement de combustion, et un aldéhyde dérivé de la dénitrification est décomposé selon la revendication 1.

Fig. 1

Comparative Example 2

Comparative Example 1

Reference Example 2

Reference Example 1

☒ 300°C
☐ 250°C

0    20    40    60    80    100

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013226543 A
- JP HEI10309443 B
- JP 2012517343 A
- JP 2005319393 A
- EP 1967264 A1
- EP 2056955 B1
- JP 2001293368 A
- JP H0655076 A
- US 20130202254 A1
- WO 2013004917 A1
- EP 2554809 A1
- US 20130064758 A1
- US 20080279741 A